# EUROPEAN PATENT SPECIFICATION

(11) **EP 3 322 017 B1**
(45) Date of publication and mention of the grant of the patent: **17.02.2021**
(21) Application number: 16821030.0
(22) Date of filing: 04.07.2016
(51) Int. Cl.: H01M 8/04044, H01M 8/0612, H01M 8/04701, H01M 8/04119, H01M 8/04291, H01M 8/04029

(54) **FUEL CELL SYSTEM AND OPERATING METHOD THEREFOR**
BRENNSTOFFZELLENSYSTEM UND BETRIEBSVERFAHREN DAFÜR
SYSTÈME DE PILE À COMBUSTIBLE ET SON PROCÉDÉ DE FONCTIONNEMENT

(30) Priority: 06.07.2015 JP 2015134854
(43) Date of publication of application: 16.05.2018
(73) Proprietor: Panasonic Intellectual Property Management Co., Ltd., Osaka-shi, Osaka 540-6207 (JP)
(72) Inventor: TAMURA, Yoshio, Osaka-shi Osaka 540-6207 (JP); TANIYAMA, Akiko, Osaka-shi Osaka 540-6207 (JP); ISHINO, Hisanori, Osaka-shi Osaka 540-6207 (JP); YUKIMASA, Akinori, Osaka-shi Osaka 540-6207 (JP); OZEKI, Masataka, Osaka-shi Osaka 540-6207 (JP)
(74) Representative: Grünecker Patent- und Rechtsanwälte PartG mbB
(86) International application number: PCT/JP2016/003179
(87) International publication number: WO 2017/006554

(56) References cited:
- WO-A1-2012/124298
- JP-A- 2010 272 342
- JP-A- 2011 113 831
- JP-A- 2012 004 085
- JP-A- 2014 075 277
- US-A1- 2007 160 881
- US-A1- 2013 337 356

## Description

### TECHNICAL FIELD

The present invention relates to a fuel cell system including a fuel cell that generates power by using a hydrogen-containing gas, and an operating method therefor.

### BACKGROUND ART

JP 2010 272342 A relates to a solid oxide fuel cell system controlling a pump output. A hydrogen-containing gas which is used as fuel during power generation in a fuel cell is not prepared in a general infrastructure. Therefore, a fuel cell system generally includes a hydrogen generator which includes a reforming apparatus. The reforming apparatus generates a hydrogen-containing gas from a city gas, a natural gas, or an LP gas which are prepared in a general infrastructure, by a reforming reaction. For example, a steam reforming reaction is generally used as the reforming reaction.

The steam reforming reaction means a reaction of generating a hydrogen-containing gas in which hydrogen is provided as the main component, in a manner that a city gas and the like serving as a raw material are caused to react with steam at a high temperature of about 600°C to 700°C, by using a reforming catalyst of a precious metal type such as a Ni type or a Ru type. In the steam reforming reaction, water is also required in addition to the raw material. Water used in the steam reforming reaction is referred to as reforming water.

Pure water is generally used as the reforming water, in order to prevent degradation of a reforming catalyst. In a case where city water such as tap water is used as the reforming water, the city water is purified to pure water by using ion exchange resin or the like, and the pure water is supplied to a reforming apparatus.

The reforming apparatus is heated by a combustor, such that the reforming apparatus has a temperature which is suitable for the steam reforming reaction. When the hydrogen generator starts, a raw material gas which flows in the hydrogen generator is brought back to the combustor and is combusted. When the hydrogen-containing gas is supplied to a fuel cell, a fuel off-gas discharged from the fuel cell is combusted in the combustor. The above-described method is generally performed.

In the fuel cell system, generally, water condensed by cooling a gas including steam which is generated in the fuel cell system is collected and used as the reforming water which is used for the steam reforming reaction in the reforming apparatus.

Thus, in comparison to a case where the total amount of the reforming water is supplied from the city water, it is possible to reduce a burden on the ion exchange resin and to reduce cost required for operating the fuel cell system. In a fuel cell system in which condensed water is collected and stored, if the condensed water is stored for a long term, a mold propagates and thus a circulation path is clogged. Therefore, a technology in which condensed water which has been collected is discharged and new city water is supplied before a mold propagates is proposed (for example, see PTL 1).

In the technology proposed in PTL 1, since the condensed water is replaced before a mold propagates, it is possible to prevent an occurrence of a trouble by clogging of a path which is caused by propagation of a mold, and clogging of a reforming water supply device. However, it is necessary that new water is supplied from the outside of the device. Thus, there is a high probability of a new mold being taken into a fuel cell system from the outside of the fuel cell system, and there is a problem in that the mold easily propagates.

A technology in which a configuration in which a heater is provided in a cooling water tank that stores condensed water is made and a heater is controlled to set a temperature of collected water in a collection tank connected to the cooling water tank to be higher than a predetermined temperature is also proposed (for example, see PTL 2). However, in such a configuration, providing the heater is required for suppressing propagation of a mold. Thus, there is a problem in that electricity is consumed and an increase of cost is caused.

### Citation List

### Patent Literature

PTL 1: Japanese Patent No. 4040062
PTL 2: Japanese Patent No. 5891443

### SUMMARY OF THE INVENTION

Considering the above-described problems in the related art, an object of the disclosure is to provide a fuel cell system in which it is possible to continue an operation of the fuel cell system by collecting water in the fuel cell system even if water is not supplied from the outside of the fuel cell system, and it is possible to suppress propagation of a mold in a simple configuration, without an increase of cost, and to provide an operating method therefor.

According to the invention, a fuel cell system is defined in claim 1.

Thus, it is possible to realize a simple configuration in which propagation of a mold in a fuel cell system is prevented without an increase in cost while covering water required in the fuel cell system with only water collected in the fuel cell system.

According to the invention, there is provided an operating method for a fuel cell system as defined in claim 7.

Thus, it is possible to realize an operating method for preventing propagation of a mold in a fuel cell system in a simple configuration, without an increase in cost, while covering water required in the fuel cell system with only water collected in the fuel cell system.

According to the fuel cell system and the operating method therefor in the disclosure, it is possible to cover water required in a fuel cell system by collecting water in the fuel cell system. Thus, it is possible to establish water self-supporting in a fuel cell system. Further, it is possible to prevent propagation of a mold without using an extra configuration, by increasing a temperature of a water path in a fuel cell system up to a temperature at which the mold dies. As described above, it is possible to realize a stable operation of a fuel cell system by achieving both water self-supporting and measures for a mold. Further advantageous embodiments are defined in the dependent claims.

### BRIEF DESCRIPTION OF DRAWINGS

FIG. 1 is a block diagram illustrating an example of a configuration of a fuel cell system according to a first exemplary embodiment of the disclosure.
FIG. 2 is a block diagram illustrating another example of the configuration of the fuel cell system in the first exemplary embodiment of the disclosure.
FIG. 3 is a flowchart illustrating an example of an operation of the fuel cell system in the first exemplary embodiment of the disclosure.
FIG. 4 is a block diagram illustrating an example of a configuration of a fuel cell system according to a second exemplary embodiment of the disclosure.
FIG. 5 is a block diagram illustrating another example of the configuration of the fuel cell system in the second exemplary embodiment of the disclosure.
FIG. 6 is a flowchart illustrating an example of an operation of the fuel cell system in the second exemplary embodiment of the disclosure.

### DESCRIPTION OF EMBODIMENTS

According to a first aspect of the disclosure, a fuel cell system is defined in claim 1.

Thus, it is possible to prevent propagation of a mold in a fuel cell system with a simple configuration, while covering an amount of water required in the fuel cell system with only an amount of water collected in the fuel cell system.

According to a second aspect of the disclosure, in the first aspect, the exhaust gas may be a combustion exhaust gas discharged from a solid oxide fuel cell.

According to such a configuration, it is possible to further prevent propagation of a mold in the tank and on the water circulation path while covering an amount of water consumed in the fuel cell system with the amount of water collected from the combustion exhaust gas discharged from the solid oxide fuel cell.

According to a third aspect of the disclosure, in the first aspect, the exhaust gas may be a combustion exhaust gas discharged from a hydrogen generator that generates a hydrogen-containing gas from a raw material.

According to such a configuration, it is possible to further prevent propagation of a mold in the tank and on the water circulation path while covering an amount of water consumed in the fuel cell system with the amount of water collected from the combustion exhaust gas discharged from the hydrogen generator.

According to a fourth aspect of the disclosure, in any one of the first to third aspects, the control apparatus may be configured to operate such that the temperature of the cooling water after passing through the radiator rises to the second predetermined temperature at a constant cycle, as the second operation mode.

According to such a configuration, it is possible to further prevent propagation of a mold for a long term.

According to the first aspect of the disclosure, the first predetermined temperature is a temperature at which collecting an amount of water required for an operation of the fuel cell system by the tank is allowed and the second predetermined temperature is a temperature at which a mold in the cooling water on the water circulation path and water collected by the tank dies.

According to such a configuration, it is possible to further reliably perform prevention of propagation of a mold in a fuel cell system while covering an amount of water required in the fuel cell system with only an amount of water collected in the fuel cell system.

According to a fifth aspect of the disclosure, in any one of the first to fourth aspects, the fuel cell system may further include a water collection unit and a residual water amount detection unit. The water collection unit performs gas-liquid separation on the exhaust gas cooled by the first heat exchanging apparatus, and supplies the resultant to the tank. The residual water amount detection unit detects an amount of residual water in the tank. The control apparatus may be configured to operate in the second operation mode in which the temperature of the cooling water after passing through the radiator is controlled to be the second predetermined temperature, in a case where the amount of residual water detected by the residual water amount detection unit is equal to or greater than a predetermined amount.

According to such a configuration, since water collection in the fuel cell system is performed in preference to sterilization of a mold, it is possible to prevent an occurrence of a situation in which water becomes insufficient in the fuel cell system.

According to a sixth aspect of the disclosure, in any one of the first to fifth aspects, the control apparatus may be configured to maintain a state where the temperature of the cooling water after passing through the radiator rises up to the second predetermined temperature, for a period which is equal to or longer than a predetermined period for a mold to die.

According to such a configuration, it is possible to further reliably sterilize a mold and to improve reliability of a fuel cell system against a mold.

According to a seventh aspect of the disclosure, there is provided an operating method for a fuel cell system as defined in claim 7.

According to this method, it is possible to prevent propagation of germs in the fuel cell system while covering water required in the fuel cell system with only water collected in the fuel cell system.

Hereinafter, exemplary embodiments of the present invention will be described with reference to the drawings. The present invention is not limited to the following exemplary embodiments.

### (First Exemplary Embodiment)

Firstly, a first exemplary embodiment of the disclosure will be described.

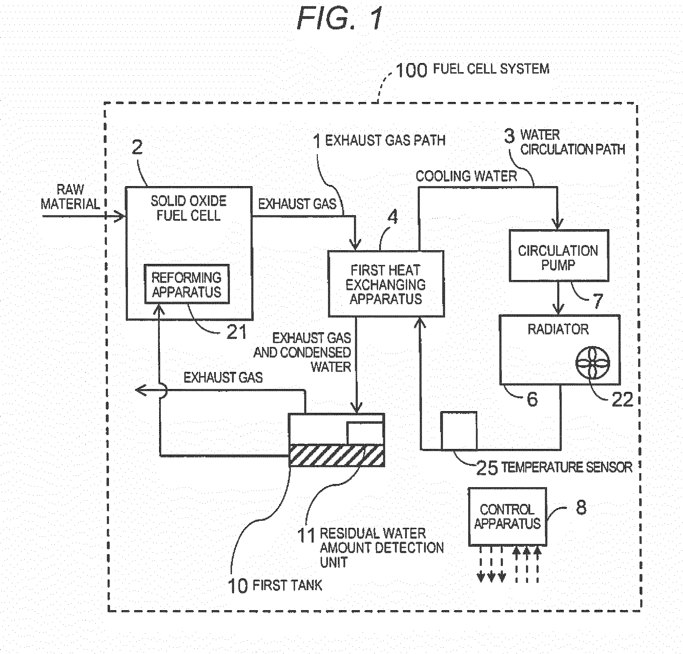

FIG. 1 is a block diagram illustrating an example of a configuration of fuel cell system 100 according to the first exemplary embodiment of the disclosure.

As illustrated in FIG. 1, fuel cell system 100 in the exemplary embodiment includes exhaust gas path 1, solid oxide fuel cell 2, water circulation path 3, first heat exchanging apparatus 4, first tank 10, radiator 6, circulation pump 7, and control apparatus 8.

Exhaust gas path 1 is a path on which an exhaust gas flows. In the exemplary embodiment, a case where the exhaust gas flowing on exhaust gas path 1 is a combustion exhaust gas discharged from solid oxide fuel cell 2 will be described.

Generally, solid oxide fuel cell 2 is configured as a hot module in which reforming apparatus 21 and a fuel cell are integrated with each other. Reforming apparatus 21 generates a hydrogen-containing gas by a reforming reaction using a raw material and steam. The fuel cell generates power by using the hydrogen-containing gas generated in reforming apparatus 21, as fuel. In solid oxide fuel cell 2, energy for maintaining reforming apparatus 21 and the fuel cell to have a temperature zone required for reactions in reforming apparatus 21 and the fuel cell is secured by combusting an anode off-gas and a cathode off-gas which are not used in the fuel cell.

The combustion exhaust gas after being combusted in solid oxide fuel cell 2 is supplied to the outside of solid oxide fuel cell 2 through exhaust gas path 1.

Water circulation path 3 is a path on which cooling water for cooling an exhaust gas discharged through exhaust gas path 1 circulates. Water circulation path 3 may also be a path on which cooling water for cooling heat generated from the fuel cell circulates (see a second exemplary embodiment). In the exemplary embodiment, the cooling water is used for cooling the exhaust gas discharged from solid oxide fuel cell 2 which is the fuel cell.

First heat exchanging apparatus 4 is a heat exchanging apparatus for performing heat exchange between the exhaust gas on exhaust gas path 1 and the cooling water on water circulation path 3. First heat exchanging apparatus 4 is provided across both paths of exhaust gas path 1 and water circulation path 3.

First tank 10 is provided for collecting condensed water generated in a manner that the exhaust gas supplied to first heat exchanging apparatus 4 through exhaust gas path 1 is cooled by heat exchange with the cooling water on water circulation path 3. In the exemplary embodiment, first tank 10 is a tank that stores the condensed water. It is assumed that first tank 10 has a configuration in which the exhaust gas flows in an upper space of the tank and is discharged and only the condensed water is stored in the tank. The amount of the condensed water in first tank 10 may be detected by residual water amount detection unit 11. In the exemplary embodiment, it is assumed that a float switch that detects a position of a liquid surface in first tank 10 is used as an example of residual water amount detection unit 11.

The followings are assumed. In a case where residual water amount detection unit 11 detects that an amount of water provided in the tank is equal to or greater than a predetermined amount, even though water self-supporting in fuel cell system 100 is not established, reforming water supplied to reforming apparatus 21 is not insufficient. However, in a case where residual water amount detection unit 11 detects that the amount of water provided in the tank is smaller than the predetermined amount, if water self-supporting in fuel cell system 100 is not established, the reforming water may be insufficient.

Therefore, when residual water amount detection unit 11 detects that the amount of residual water is smaller than the predetermined amount, it is desirable that fuel cell system 100 is operated so as to establish water self-supporting in fuel cell system 100. It is possible to realize fuel cell system 100 which can establish water self-supporting, by performing such a control.

Radiator 6 is an apparatus that dissipates heat held by the cooling water flowing on water circulation path 3, so as to cool the cooling water. In the exemplary embodiment, an air to be taken in from the outside of fuel cell system 100 by a cooling unit such as fan 22, which is separately provided in radiator 6. The cooling water is cooled by the air which has been taken in. Then, the heated air is discharged to the outside of fuel cell system 100 by the cooling unit such as fan 22.

Circulation pump 7 is a pump that causes the cooling water on water circulation path 3 to be circulated. In the exemplary embodiment, as an example, circulation pump 7 is installed to be positioned on a downstream of the first heat exchanging apparatus and an upstream of radiator 6, on water circulation path 3. In the exemplary embodiment, it is assumed that the cooling water circulates on water circulation path 3 in an order of first heat exchanging apparatus 4, circulation pump 7, and radiator 6. However, the disclosure is not limited to the example, and circulation pump 7 may be disposed at another position on water circulation path 3.

Control apparatus 8 is an apparatus that controls the amount of dissipated heat by the cooling water in radiator 6. Control apparatus 8 includes an arithmetic processing unit (not illustrated) and a storage unit (not illustrated). The storage unit stores a control program.

Control apparatus 8 controls the amount of dissipated heat in radiator 6, such that the temperature of the cooling water after passing through radiator 6 is adjusted to have a predetermined value or to be in a predetermined range. In the exemplary embodiment, the temperature of the cooling water after passing through radiator 6 is measured by temperature sensor 25. In the exemplary embodiment, control apparatus 8 controls driving of at least any of the cooling unit such as fan 22 in radiator 6 and circulation pump 7, to adjust the temperature of the cooling water.

An operation and an action of fuel cell system 100 in the exemplary embodiment, which is configured as described above will be described below. It is assumed that control apparatus 8 controls the components of fuel cell system 100 so as to perform the following operations.

Solid oxide fuel cell 2 includes reforming apparatus 21 that generates a hydrogen-containing gas by the reforming reaction using a raw material and steam. Reforming water may be separately supplied to solid oxide fuel cell 2, in order to be used in the reforming reaction in reforming apparatus 21 (not illustrated). Generally, the reforming water is vaporized by using heat in solid oxide fuel cell 2.

Here, if tap water itself is used as the reforming water, chlorine, calcium, and the like which are included in the tap water may cause the reforming catalyst to be degraded or cause the reforming apparatus to be clogged. Therefore, water in a state of being purified as pure water by using ion exchange resin or the like is used as the reforming water.

Here, if the entirety of the reforming water is set to be covered with tap water, a load on the ion exchange resin is increased and a very large amount of the ion exchange resin is required. Therefore, the size of fuel cell system 100 is increased and restrictions for a place in which the fuel cell system can be installed are increased. In addition, cost for the ion exchange resin is increased and thus cost for fuel cell system 100 is increased. In the exemplary embodiment, water obtained by being collected in fuel cell system 100 is used as water which is used as the reforming water.

The water collected in fuel cell system 100 is water which has high purity and is suitable for being used in the reforming reaction, in comparison to tap water. Thus, it is possible to reduce a load on the ion exchange resin or not to require the ion exchange resin.

In solid oxide fuel cell 2, energy for maintaining the reforming apparatus and the fuel cell to have a temperature zone (from 600°C to 1000°C as an example) required for the reforming reaction in the reforming apparatus and power generation in the fuel cell is supplied by combusting the anode off-gas and the cathode off-gas which are not used in the fuel cell. In the exemplary embodiment, water of which the amount is greater than the amount of the reforming water required in solid oxide fuel cell 2 is contained in the combustion exhaust gas.

Thus, the combustion exhaust gas (200°C to 300°C as an example) is supplied to first heat exchanging apparatus 4 through exhaust gas path 1, and the combustion exhaust gas is cooled in first heat exchanging apparatus 4 by the cooling water on water circulation path 3. Thus, steam contained in the exhaust gas is condensed. The condensed water is collected in first tank 10, and is supplied to reforming apparatus 21, as the reforming water. Here, the amount of water collected in first tank 10 varies depending on the temperature of the cooled exhaust gas in first heat exchanging apparatus 4.

If the temperature of the cooling water flowing in first heat exchanging apparatus 4 increases, the temperature of an exhaust gas discharged from first heat exchanging apparatus 4 also increases. In fuel cell system 100 in the exemplary embodiment, the amount of water required as the reforming water may be secured in first tank 10 so long as an exhaust gas discharged from first heat exchanging apparatus 4 is cooled up to about 45°C. However, if the temperature of the exhaust gas discharged from first heat exchanging apparatus 4 is higher than 45°C, water of only an amount which is smaller than the amount of water required as the reforming water may be collected in first tank 10. As described above, a mechanism in which water of an amount which is equal to or greater than the amount of water required as the reforming water is collected in first tank 10 is referred to as water self-supporting.

Next, water circulation path 3 on which the cooling water for cooling the exhaust gas in first heat exchanging apparatus 4 will be described. The temperature of the cooling water which has passed through first heat exchanging apparatus 4 increases by the cooling water receiving heat of the exhaust gas. In a state where the temperature thereof has increased, cooling the exhaust gas is not allowed even though cooling water is supplied again to first heat exchanging apparatus 4 by using circulation pump 7.

Therefore, the cooling water is cooled in radiator 6. In the exemplary embodiment, it is necessary that the exhaust gas is cooled up to about 45°C, in order to establish water self-supporting in fuel cell system 100. Therefore, the amount of dissipated heat in radiator 6 is adjusted such that the temperature of the cooling water which is a heat medium for cooling the exhaust gas is set to be equal to or lower than 42°C.

Here, if the temperature of each of the components is continuously controlled so as to establish water self-supporting in fuel cell system 100 in the exemplary embodiment, a mold may propagate in at least any portion of first tank 10 and water circulation path 3 from radiator 6 to first heat exchanging apparatus 4.

Here, the mold refers to fungi which are present in the atmosphere. If the mold propagates, clogging of a water path may be caused. The mold may be sterilized by setting the temperature to be high. For example, it is possible to sterilize a mold in about 30 minutes, by heating to a temperature which is equal to or higher than 50°C.

Thus, in a case of sterilizing a mold, control apparatus 8 performs control as follows. That is, the amount of dissipated heat in radiator 6 is reduced in comparison to that in a normal operation or the circulation speed of the cooling water by circulation pump 7 is reduced, with combining driving conditions of radiator 6 and circulation pump 7. Thus, the temperature of the cooling water supplied to first heat exchanging apparatus 4 is equal to or higher than 50°C. It is possible to set the temperature of the entirety of water circulation path 3 which includes water circulation path 3 from radiator 6 to first heat exchanging apparatus 4, to be equal to or higher than 50°C, and to sterilize the mold, by performing the above control.

At this time, the temperature of the cooling water supplied to first heat exchanging apparatus 4 is equal to or higher than 50°C. Thus, the temperature of the exhaust gas discharged from first heat exchanging apparatus 4 also increases to be equal to or higher than 50°C. If the exhaust gas having the above temperature is brought into contact with the condensed water in first tank 10, the condensed water is heated, and thus it is possible to sterilize the mold in first tank 10.

The condensed water in first tank 10 is heated only up to a temperature which is equal to or lower than a temperature which is equivalent to the temperature of the exhaust gas. Thus, it is necessary that the amount of dissipated heat by the cooling water in radiator 6 is decreased and the temperature of the cooling water is increased by the configuration of the apparatus, so as to set the temperature of the condensed water to warm to 50°C or higher.

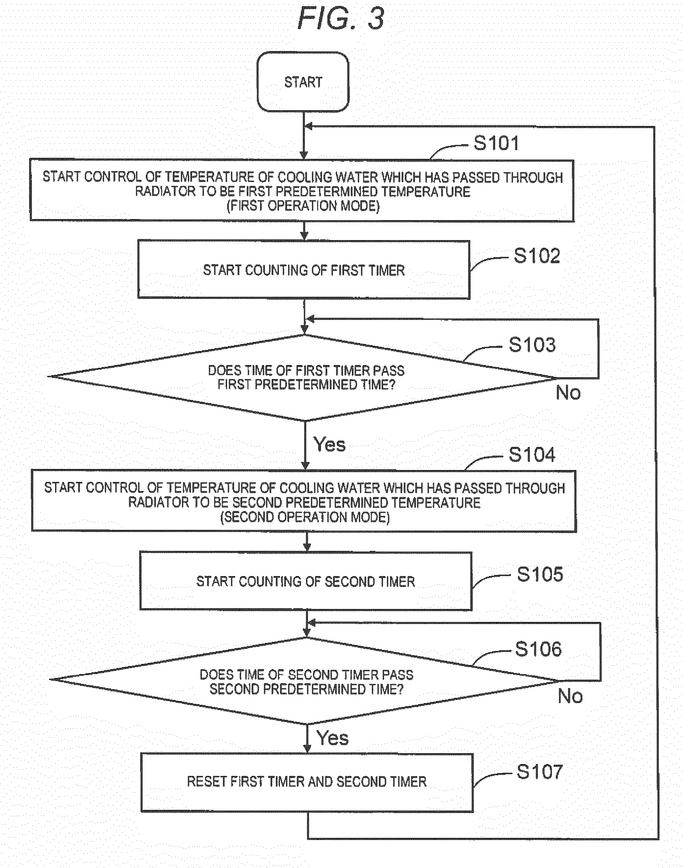

FIG. 3 is a flowchart illustrating an example of an operation of fuel cell system 100 in the first exemplary embodiment of the disclosure.

In the exemplary embodiment, as illustrated in the flowchart of FIG. 3, firstly, control apparatus 8 starts an operation of fuel cell system 100 in a first operation mode (normal mode) (S101). In the first operation mode, the temperature of the cooling water which has passed through radiator 6 is controlled to be a first predetermined temperature. Here, the first predetermined temperature may be a temperature at which water self-supporting is established in fuel cell system 100. In the exemplary embodiment, for example, the first predetermined temperature is set to 40°C.

Then, control apparatus 8 starts counting of a first timer (S102). Control apparatus 8 determines whether or not the time of the first timer has passed the first predetermined time (S103). Here, the first predetermined time means a cycle for sterilizing a mold. In the exemplary embodiment, the first predetermined time is set to 100 hours and it is assumed that sterilizing a mold is performed for each of 100 hours. In Step S103, if it is determined that the time of the first timer has passed the predetermined time (YES in S103), control apparatus 8 starts an operation of fuel cell system 100 in a second operation mode (maintenance mode) (S104). In the second operation mode, the temperature of the cooling water which has passed through radiator 6 is controlled to be a second predetermined temperature. Step S103 is repeated and the first operation mode continues, until the time of the first timer passes the first predetermined time in Step S103 (NO in S103).

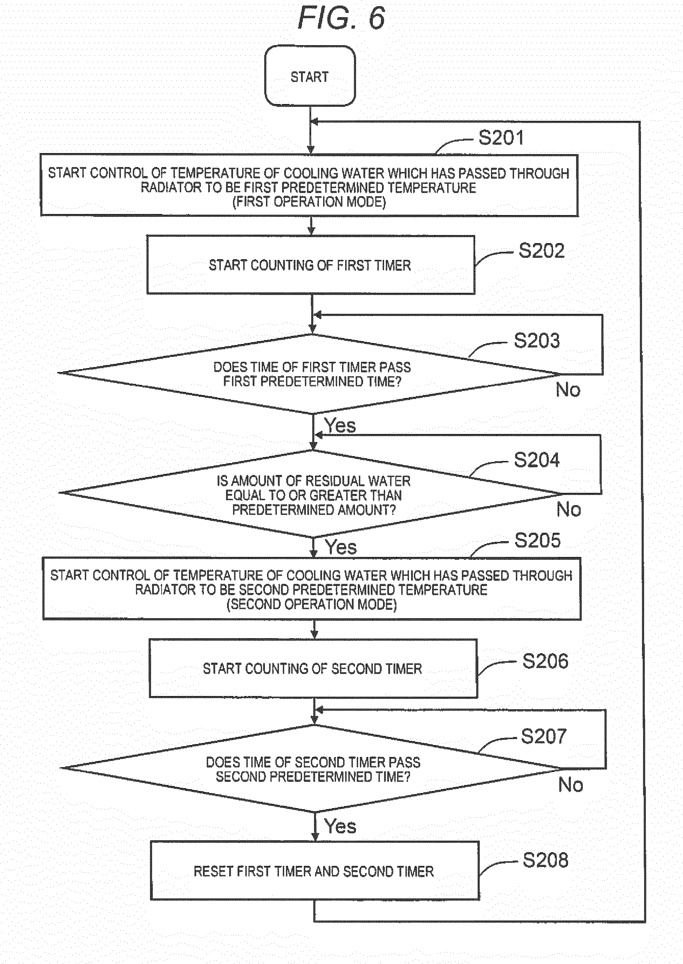

In the configuration in which residual water amount detection unit 11 is provided, if it is determined that the first timer has passed the predetermined time (YES in S103) in Step S103, control apparatus 8 may cause residual water amount detection unit 11 to determine whether or not water of a predetermined amount is present in first tank 10. Control apparatus 8 may not perform processes subsequent to Step S104, until it is detected that water of the predetermined amount is present. Control apparatus 8 may perform a process of waiting until water of the predetermined amount or greater is stored (see Step S204 in FIG. 6).

The predetermined amount for an amount of residual water in first tank 10 means an amount of water with which an amount of water to be supplied to reforming apparatus 21 as the reforming water is sufficiently covered even though water self-supporting is not established in fuel cell system 100, during an operation in the second operation mode (maintenance mode) which will be described later, that is, during a period when the temperature of the cooling water which has passed through radiator 6 is controlled to be a second predetermined temperature at which a mold can be sterilized. In the exemplary embodiment, as an example, it is assumed that the predetermined amount is an amount of water of 300 mL.

Here, the second predetermined temperature refers to the temperature of the cooling water, which is required for sterilizing a mold for a second predetermined time which will be described later. In the exemplary embodiment, the second predetermined temperature is set to 55°C. It is possible to sterilize a mold in the condensed water in first tank 10 in addition to a mold on water circulation path 3, by being set to be the above temperature. Temperature setting of the second predetermined temperature varies depending on the configuration of the apparatus. Thus, the temperature is not limited to the above-described temperature and any temperature may be set, so long as a mold can be sterilized.

Then, control apparatus 8 starts counting of a second timer (S105). Control apparatus 8 determines whether or not the time of the second timer has passed the second predetermined time (S106). Here, the second predetermined time refers to a time required for sterilizing a mold at the above-described second predetermined temperature. In the exemplary embodiment, the second predetermined time is set to 30 minutes. The second predetermined time varies depending on the temperature when a mold is sterilized. As the second predetermined temperature which is the temperature in sterilization is set to be a higher temperature, the time (second predetermined time) taken to perform sterilization can be reduced more.

If control apparatus 8 determines that the time of the second timer has passed the second predetermined time (YES in S106), control apparatus 8 resets the counting of the first timer and the second timer (S107). Step S106 is repeated and the second operation mode continues, until the time of the second timer passes the second predetermined time (NO in S106).

Control apparatus 8 causes the control to return to Step S101 in a state where the first timer and the second timer have been reset. As described above, the processes from Step S101 to Step S107 are repeated during a period when power generation is not performed in fuel cell system 100.

As described above, according to the exemplary embodiment, in fuel cell system 100, it is possible to cover water required for the reforming reaction and the like without being supplied from the outside, for example, city water. Thus, it is possible to reduce a risk of a mold being taken into fuel cell system 100 from the outside thereof. In addition, for example, an operation mode is periodically changed and thus the temperature of cooling water after passing through radiator 6 is set to be higher than the temperature in the normal operation. Accordingly, it is possible to sterilize a mold, and to prevent an occurrence of a situation in which the mold propagates in fuel cell system 100, and the water path is clogged.

As the exhaust gas flowing on exhaust gas path 1, any exhaust gas may be used so long as the gas contains steam generated in fuel cell system 100. For example, a combustion exhaust gas discharged from the hydrogen generator that generates a hydrogen-containing gas used when power is generated in the fuel cell, and an anode off-gas and a cathode off-gas which are discharged from the fuel cell are exemplified.

In the exemplary embodiment, the cooling water is used for cooling the exhaust gas discharged from solid oxide fuel cell 2 which is the fuel cell. However, heat generated from the fuel cell is not limited to heat in the exhaust gas.

For example, heat generated from the fuel cell may be moved by a heat medium for cooling, which flows in the fuel cell. In this case, heat exchange may be performed between the heat medium and the cooling water by using a heat exchanging apparatus on water circulation path 3, which is separate from first heat exchanging apparatus 4. A circulation configuration in which the heat medium is brought back into the fuel cell after coming out from the heat exchanging apparatus may be made. Any configuration may be made so long as heat generated from the fuel cell is cooled by the cooling water flowing on water circulation path 3, in a configuration.

As a type of the heat exchanging apparatus regarding first heat exchanging apparatus 4, any type may be used, and a type in which an exhaust gas and cooling water may move heat without being mixed with each other may be used.

First tank 10 may have any configuration so long as the condensed water is collected so as to cause water condensed from an exhaust gas not to be discharged to the outside of fuel cell system 100 along with the exhaust gas.

Examples of the heat medium for cooling the cooling water in radiator 6 include an air and water. However, any other heat medium and any configuration may be used so long as cooling is possible.

As circulation pump 7, any type of pump may be used so long as the pump causes the cooling water on water circulation path 3 to be circulated. In the exemplary embodiment, circulation pump 7 is installed on the downstream of first heat exchanging apparatus 4 and the upstream of radiator 6, on water circulation path 3. However, it is not limited to this position, and circulation pump 7 may be installed, for example, on a downstream of radiator 6 and an upstream of first heat exchanging apparatus 4.

As control apparatus 8, any control apparatus which can control the entirety or a portion of fuel cell system 100 may be used if the apparatus has a control function. A micro processor unit (MPU) or a central processing unit (CPU) is exemplified as the arithmetic processing unit of control apparatus 8. A semiconductor memory and the like are exemplified as the storage unit of control apparatus 8. Control apparatus 8 controls the arithmetic processing unit to execute a program stored in the storage unit, so as to perform the above-described various controls.

Control apparatus 8 may be a single control apparatus or a plurality of control apparatuses. That is, control apparatus 8 may be configured by a single control apparatus that performs centralized control. Alternatively, control apparatus 8 may have a configuration in which a plurality of control units perform distributed control in cooperation with each other. This is similarly applied to a control apparatus in another exemplary embodiment which will be described later.

Further, in the exemplary embodiment, control apparatus 8 controls the amount of dissipated heat in radiator 6, to adjust the temperature of the cooling water after passing through radiator 6 to have a predetermined value or to be in a predetermined range. At this time, in the above-described exemplary embodiment, the temperature of the cooling water after passing through radiator 6 is measured by temperature sensor 25 such as a thermoelement or a thermistor. However, the disclosure is not limited to this configuration. For example, a configuration in which the temperature of an exhaust gas discharged from first heat exchanging apparatus 4 is measured, the temperature of the cooling water is estimated based on the measured temperature of the exhaust gas, and then the amount of dissipated heat in radiator 6 is controlled based on the estimated temperature may be made.

A configuration in which control apparatus 8 estimates the temperature of the cooling water based on the number of rotations, an operation voltage, and the like of the cooling unit such as the fan, which determines the amount of dissipated heat in radiator 6. Any configuration may be made so long as the temperature of the cooling water is controlled by radiator 6.

In water circulation path 3 from the downstream of radiator 6 to the upstream of first heat exchanging apparatus 4, a mold easily propagates at a portion at which the cooling water easily stays in the flow of the cooling water. Thus, it is desirable that the amount of dissipated heat by the cooling water in radiator 6 such that at least the portion at which the cooling water easily stays has a temperature which is equal to or higher than a temperature which allows sterilization of a mold.

In particular, in a case where ion exchange resin is installed on water circulation path 3 from the downstream of radiator 6 to the upstream of first heat exchanging apparatus 4 in order to maintain water quality, water may stay in the ion exchange resin. In such a configuration, when a mold is sterilized, it is desirable that the temperature of water up to a portion at which the water stays in the ion exchange resin is controlled to be a temperature at which a mold dies.

Since the purity of the condensed water collected in first tank 10 is increased by the ion exchange resin, in fuel cell system 100 in which the condensed water is supplied as the reforming water, it is desirable that a design is made so as to set the temperature of the ion exchange resin to increase when a mold is sterilized.

In this manner, it is possible to prevent an occurrence of a situation in which a mold propagates at a portion at which water easily stays in the ion exchange resin, and thus the path is clogged. When the temperature of the ion exchange resin is increased, it is desirable that the temperature is controlled not to be higher than a heat-resistant temperature of the ion exchange resin.

Fuel cell system 100 may have a configuration in which extra water is stored in a tank or the like when water self-supporting is established, and thus water which is to be immediately supplied as the reforming water is prepared not to be insufficient even if fuel cell system 100 is in a state where water self-supporting is not established.

In the exemplary embodiment, it is necessary that the exhaust gas is cooled up to about 45°C, in order to establish water self-supporting in fuel cell system 100. Thus, the amount of dissipated heat in radiator 6 is adjusted to cause the temperature of the cooling water which is a heat medium for cooling the exhaust gas to be equal to or lower than 42°C. However, the temperature of the cooling water varies depending on the configuration of the apparatus. Thus, the temperature is not limited to the above-described example, and may be appropriately set in accordance with the configuration of the apparatus.

As the first timer, any configuration may be provided instead of counting by control apparatus 8, so long as elapsing of the time from when Step S101 is performed is recognized. As the second timer, any configuration may be provided instead of counting by control apparatus 8, so long as elapsing of the time from when an operation of sterilizing a mold is performed in Step S104 is recognized.

As the first predetermined time in Step S103, any time may be set so long as a situation in which a mold propagates and the path is clogged is not caused for the time. As the second predetermined temperature and the second predetermined time used when a mold is sterilized, any temperature and any time may be combined so long as a mold can be sterilized.

In the above-described exemplary embodiment, a case where fuel cell system 100 includes exhaust gas path 1, solid oxide fuel cell 2, water circulation path 3, first heat exchanging apparatus 4, first tank 10, radiator 6, circulation pump 7, and control apparatus 8 is described. However, the present invention is not limited to the above example.

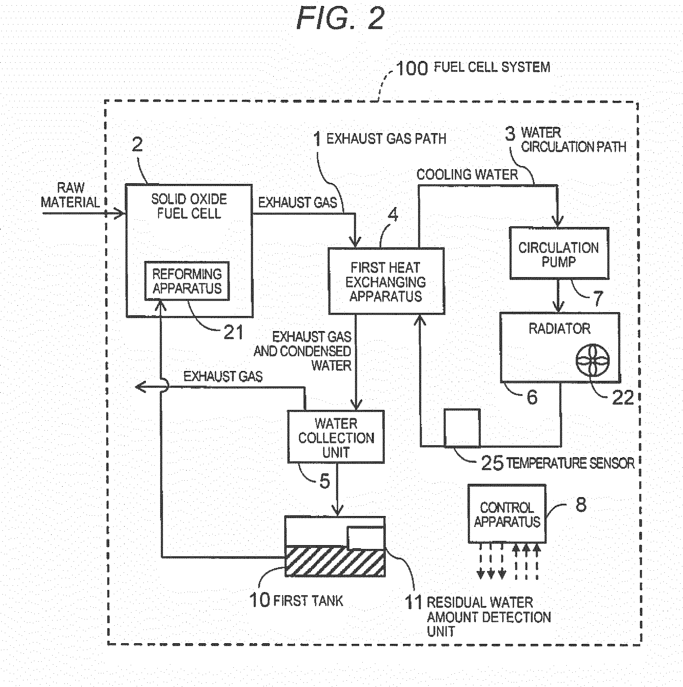

FIG. 2 is a block diagram illustrating another example of the configuration of fuel cell system 100 in the first exemplary embodiment of the disclosure.

As illustrated in FIG. 2, fuel cell system 100 may further include water collection unit 5.

Water collection unit 5 has a function as a gas-liquid separation device. Separation of a gas component (exhaust gas) and condensed water from each other is accelerated in water collection unit 5. Condensed water separated in water collection unit 5 is supplied to first tank 10. In the example illustrated in FIG. 2, first tank 10 stores the condensed water separated in water collection unit 5, and the condensed water is supplied to reforming apparatus 21 of solid oxide fuel cell 2. As described above, since first tank 10 is heated by the collected water in water collection unit 5, it is possible to sterilize the condensed water in first tank 10 by performing the operation of sterilizing a mold in a manner that the temperature of the cooling water on water circulation path 3 is increased.

As described above, similar to the configuration illustrated in FIG. 1, with the configuration illustrated in FIG. 2, it is also possible to provide a fuel cell system in which it is possible to continue an operation of the fuel cell system by collecting water in the fuel cell system even if water is not supplied from the outside of the fuel cell system, and it is possible to suppress propagation of a mold in a simple configuration, without an increase of cost.

### (Second Exemplary Embodiment)

Next, a second exemplary embodiment of the disclosure will be described.

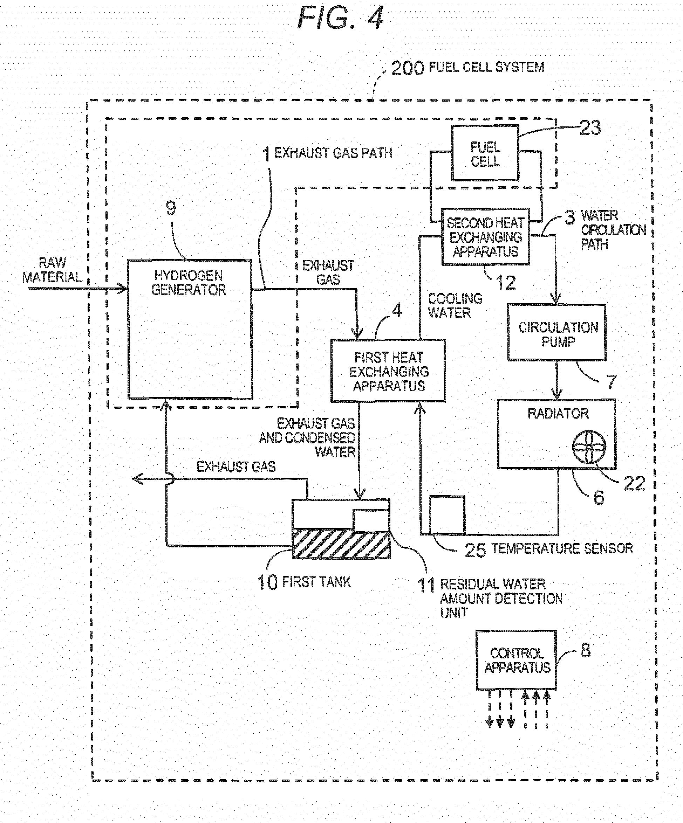

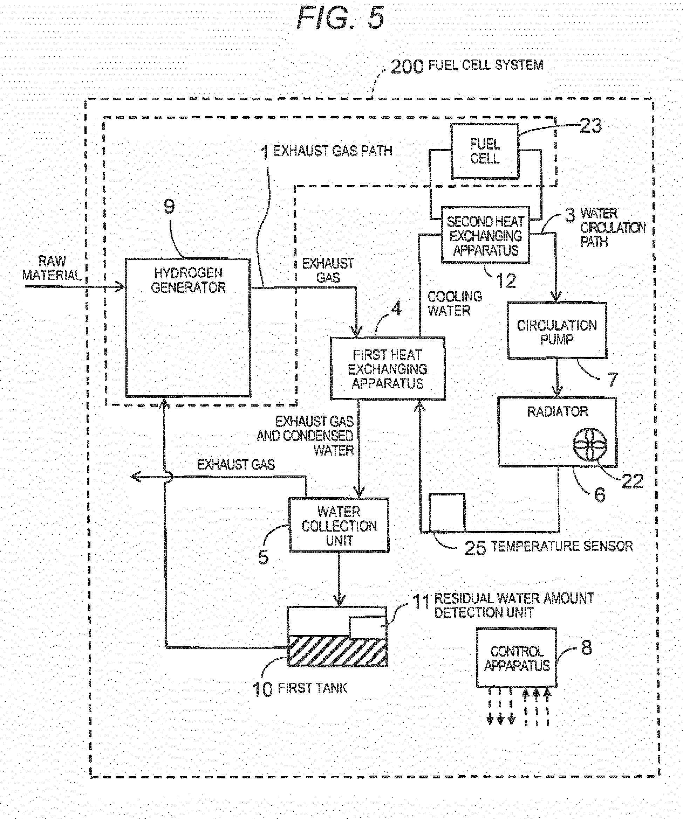

FIG. 4 is a block diagram illustrating an example of a configuration of fuel cell system 200 in the second exemplary embodiment of the disclosure. FIG. 5 is a block diagram illustrating another example of the configuration of fuel cell system 200.

As illustrated in FIGs. 4 and 5, fuel cell system 200 according to the second exemplary embodiment has a configuration in which hydrogen generator 9 that discharges an exhaust gas is provided instead of solid oxide fuel cell 2, and second heat exchanging apparatus 12 is added on water circulation path 3, in comparison to the configuration of fuel cell system 100 in the first exemplary embodiment illustrated in FIGs. 1 and 2. The configuration of the fuel cell system in the second exemplary embodiment is similar to that in the first exemplary embodiment except for the above-described point.

A fuel cell used in fuel cell system 200 in the exemplary embodiment is solid polymer fuel cell 23. Hydrogen generator 9 is an apparatus that supplies a hydrogen-containing gas to solid polymer fuel cell 23. Hydrogen generator 9 includes a reforming apparatus (not illustrated) that generates a hydrogen-containing gas, and a combustor (not illustrated) that heats the reforming apparatus. A combustion exhaust gas discharged from the combustor flows on exhaust gas path 1. Here, an example of an operation temperature of hydrogen generator 9 is from 600°C to 700°C, and an example of the temperature of the exhaust gas is from 80°C to 90°C.

First tank 10 is a tank for storing condensed water which has been collected from the exhaust gas by first heat exchanging apparatus 4. Water stored in first tank 10 is supplied to the reforming apparatus in hydrogen generator 9, as the reforming water. As described above, first tank 10 is heated by the exhaust gas (configuration in FIG. 4) discharged from first heat exchanging apparatus 4 or the collected water (configuration in FIG. 5) of water collection unit 5. Thus, it is possible to also sterilize the condensed water in first tank 10 by performing the operation of sterilizing a mold in a manner that the temperature of the cooling water is increased.

Residual water amount detection unit 11 is means for detecting the residual amount of water stored in first tank 10. Residual water amount detection unit 11 may be randomly provided. However, in the exemplary embodiment, it is assumed that a float switch that detects the position of a liquid surface in first tank 10 is used as an example of residual water amount detection unit 11.

The followings are assumed. In a case where residual water amount detection unit 11 detects that an amount of water provided in the tank is equal to or greater than a predetermined amount, even though water self-supporting in fuel cell system 200 is not established, the reforming water supplied to the reforming apparatus is not insufficient. However, in a case where residual water amount detection unit 11 detects that the amount of water provided in the tank is smaller than the predetermined amount, water self-supporting in fuel cell system 200 is not established, and the reforming water may be insufficient.

Therefore, when residual water amount detection unit 11 detects that the amount of residual water is smaller than the predetermined amount, it is desirable that fuel cell system 200 is operated so as to establish water self-supporting in fuel cell system 200.

Second heat exchanging apparatus 12 is a heat exchanging apparatus provided on water circulation path 3. In the exemplary embodiment, the cooling water flowing in first heat exchanging apparatus 4 flows toward radiator 6 through second heat exchanging apparatus 12. In second heat exchanging apparatus 12, heat exchange is performed between heat of the cooling water and heat generated in the fuel cell (solid polymer fuel cell 23). Second heat exchanging apparatus 12 is a heat exchanging apparatus that cools the fuel cell with the cooling water. Second heat exchanging apparatus 12 collects heat generated in the fuel cell by using the cooling water. The second exemplary embodiment will be described below focusing on a difference from the first exemplary embodiment.

FIG. 6 is a flowchart illustrating an example of an operation of fuel cell system 200 in the second exemplary embodiment of the disclosure.

In the exemplary embodiment, as illustrated in the flowchart of FIG. 6, firstly, control apparatus 8 starts an operation in the first operation mode (normal mode) (S201). In the first operation mode, the temperature of the cooling water which has passed through radiator 6 is controlled to be a first predetermined temperature. Here, the first predetermined temperature may be a temperature at which water self-supporting is established in fuel cell system 200. In the exemplary embodiment, as an example, the first predetermined temperature is set to 40°C.

Then, control apparatus 8 starts counting of the first timer (S202). Then, control apparatus 8 determines whether or not the time of the first timer has passed the first predetermined time (S203). The first predetermined time means a cycle for sterilizing a mold. In the exemplary embodiment, as an example, the first predetermined time is set to 100 hours. If it is determined that the time of the first timer has passed the first predetermined time (YES in S203), control apparatus 8 determines whether or not the amount of residual water in first tank 10, which is detected by residual water amount detection unit 11 is equal to or greater than a predetermined amount (S204). Step S203 is repeated and the first operation mode continues, until the time of the first timer passes the first predetermined time (NO in S203).

The predetermined amount for an amount of residual water in first tank 10 means an amount of water with which an amount of water to be supplied to the reforming apparatus as the reforming water is sufficiently covered even though water self-supporting is not established in fuel cell system 200, during an operation in the second operation mode (maintenance mode) which will be described later, that is, during a period when the temperature of the cooling water which has passed through radiator 6 is controlled to be a second predetermined temperature at which a mold can be sterilized. In the exemplary embodiment, as an example, it is assumed that the predetermined amount is an amount of water of 300 mL.

If it is determined that the amount of residual water is equal to or greater than the predetermined amount, in Step S204 (YES in S204), control apparatus 8 starts the second operation mode in which the temperature of the cooling water which has passed through radiator 6 is controlled to be the second predetermined temperature (S205). In a case where the amount of residual water is smaller than the predetermined amount, in Step S204 (NO in S204), Step S204 is repeated. Control apparatus 8 waits until the amount of residual water is equal to or greater than the predetermined amount. Here, the second predetermined temperature refers to the temperature of the cooling water, which is required for sterilizing a mold. In the exemplary embodiment, the second predetermined temperature is set to 55°C. It is possible to sterilize germs in the condensed water in water collection unit 5 and the first tank in addition to germs on water circulation path 3, by being set to be the above temperature. In the configuration in which residual water amount detection unit 11 is not provided, Step S204 is not performed (see FIG. 3).

Then, control apparatus 8 starts counting of the second timer (S206). Control apparatus 8 determines whether or not the time of the second timer has passed the second predetermined time (S207). The second predetermined time refers to a time required for sterilizing a mold at the above-described second predetermined temperature. In the exemplary embodiment, the second predetermined time is set to 30 minutes. The second predetermined time varies depending on the second predetermined temperature when a mold is sterilized. As the second predetermined temperature which is the temperature in sterilization is set to be a higher temperature, the time (second predetermined time) taken to perform sterilization can be reduced more.

In Step S207, if it is determined that the time of the second timer has passed the second predetermined time (YES in S207), control apparatus 8 resets the counting of the first timer and the second timer (S208). Control apparatus 8 causes the control to return to Step S201 in a state where the first timer and the second timer have been reset. Control apparatus 8 brings the mode back to the first operation mode in which water self-supporting is established, and thus the temperature of the cooling water is controlled to be the first predetermined temperature by radiator 6. Step S207 is repeated and the second operation mode continues, until the time of the second timer passes the second predetermined time in Step S207 (NO in S207).

In the above-described exemplary embodiment, a case where fuel cell system 200 includes exhaust gas path 1, hydrogen generator 9, water circulation path 3, first heat exchanging apparatus 4, first tank 10, radiator 6, circulation pump 7, and control apparatus 8 is described. However, the present invention is not limited to the above example.

FIG. 5 is a block diagram illustrating another example of the configuration of fuel cell system 200 in the second exemplary embodiment of the disclosure.

As illustrated in FIG. 5, fuel cell system 200 may further include water collection unit 5.

Water collection unit 5 has a function as a gas-liquid separation device. Separation of a gas component (exhaust gas) and condensed water from each other is accelerated in water collection unit 5. Condensed water separated in water collection unit 5 is supplied to first tank 10. In the example illustrated in FIG. 5, first tank 10 stores the condensed water separated in water collection unit 5, and the condensed water is supplied to hydrogen generator 9. As described above, since first tank 10 is heated by the collected water in water collection unit 5, it is possible to sterilize the condensed water in first tank 10 by performing the operation of sterilizing a mold in a manner that the temperature of the cooling water on water circulation path 3 is increased.

As described above, similar to the configuration illustrated in FIG. 4, with the configuration illustrated in FIG. 5, it is also possible to provide a fuel cell system in which it is possible to continue an operation of the fuel cell system by collecting water in the fuel cell system even if water is not supplied from the outside of the fuel cell system, and it is possible to suppress propagation of a mold in a simple configuration, without an increase of cost.

As described above, according to the exemplary embodiment, in fuel cell system 200, it is possible to supply the reforming water without counting on water supply from the outside thereof, and to stably supply power to the outside of fuel cell system 200 while preventing an occurrence of a situation in which a mold propagates and the water path is blocked in fuel cell system 200.

As the fuel cell, any type may be used so long as power may be generated by using a hydrogen-containing gas as fuel.

Residual water amount detection unit 11 may have a configuration in which the amount of residual water is detected by detecting the position of a liquid surface in first tank 10, or may have a configuration in which the amount of residual water is detected by detecting the weight of water in first tank 10. Residual water amount detection unit 11 may have a configuration in which an absolute value of the amount of residual water can be detected, or may have a configuration in which it is detected whether or not water of an amount which is equal to or greater than a predetermined amount is provided.

Second heat exchanging apparatus 12 performs heat exchange between heat of the cooling water and heat generated from the fuel cell. Second heat exchanging apparatus 12 may be the fuel cell itself, and water circulation path 3 may be provided to be penetrated in the fuel cell. Alternatively, second heat exchanging apparatus 12 may have a configuration in which a heat medium flowing in the fuel cell flows in second heat exchanging apparatus 12 so as to perform heat exchange between heat of the fuel cell and the cooling water, and the heat medium circulates in the fuel cell. Second heat exchanging apparatus 12 may have any configuration so long as heat generated in the fuel cell can be collected by the cooling water in the configuration.

It is desirable that the operation illustrated in FIG. 6 is continuously and normally performed during a period when power generation is performed in fuel cell system 200.

As the first timer, any configuration may be provided so long as elapsing of the time from when Step S201 is performed is recognized.

As the first predetermined time in Step S203, any time may be set so long as a situation in which a mold propagates and the path is clogged is not caused for the time.

The predetermined amount for the amount of residual water in Step S204 varies depending on the time for sterilizing a mold, the configuration of fuel cell system 200, the amount of generated power of fuel cell system 200, and the like. Thus, the amount of residual water may have any value so long as the reforming water is not insufficient during a period when a mold is sterilized in the second operation mode.

Temperature setting of the second predetermined temperature varies depending on the configuration of the apparatus. Thus, any temperature may be set, so long as a mold can be sterilized.

As the second timer, any configuration may be provided so long as elapsing of the time from when an operation of sterilizing a mold is performed in Step S205 is recognized.

As the second predetermined temperature and the second predetermined time in Step S207, any temperature and any time may be combined so long as a mold can be sterilized.

Regarding changing of the amount of generated power of fuel cell system 200, control apparatus 8 may perform adjustment of increasing or decreasing the amount of residual water, which is used in the determination of Step S204, in accordance with the change.

In a case where the amount of residual water is smaller than the predetermined amount, in Step S204, control apparatus 8 continuously performs an operation in the first operation mode in which the temperature of the cooling water is controlled to be the first predetermined temperature by using radiator 6. Then, if the amount of residual water which is detected by residual water amount detection unit 11 is equal to or greater than the predetermined amount, control apparatus 8 performs an operation in the second operation mode in which the temperature of the cooling water is controlled to be the second predetermined temperature. Therefore, it is desirable that the time of the first timer in Step S202 is set to be shorter than a time when propagation of a mold starts in practice, and thus a sufficient time is provided until the amount of residual water is equal to or greater than the predetermined amount.

In the exemplary embodiment, a configuration in which the cooling water flowing on water circulation path 3 causes the total heat obtained from the first heat exchanging apparatus and the second heat exchanging apparatus to be emitted in radiator 6 is described. However, a configuration in which a hot water storage tank for storing heat in a form of hot water is provided on water circulation path 3 may be made. A configuration in which heat obtained by the cooling water is supplied to the outside of fuel cell system 200 through the hot water storage tank in a form of hot water may be made.

The hot water storage tank is desirably installed on a downstream side of second heat exchanging apparatus 12 and an upstream side of radiator 6, on water circulation path 3.

It is desirable that the second predetermined temperature is set to be high and a sterilization time is set to be short, in order to perform the operation of sterilizing a mold without an occurrence of the reforming water becoming insufficient even though the amount of residual water in first tank 10, which is detected by residual water amount detection unit 11 is small. It is desirable that the second predetermined temperature is set to be equal to or lower than heat-resistant temperatures of materials, in order not to degrade the materials used in water circulation path 3, water collection unit 5, and first tank 10 due to a thermal influence.

Many modifications and other embodiments of the invention will be apparent to those skilled in the art, from the above descriptions. Thus, the descriptions are to be construed only as examples, and is provided for the purpose of teaching those skilled in the related art the best mode of carrying out the invention.

### INDUSTRIAL APPLICABILITY

As described above, according to the disclosure, it is possible to exhibit a special effect in that it is possible to prevent propagation of a mold while reforming water is stably supplied even though water is not supplied from the outside. Thus, the disclosure is useful because the disclosure can be applied to a fuel cell system including a fuel cell that generates power by using a hydrogen-containing gas, an operating method therefor, and to a use in which stable power generation is not caused, for example, a use of a household fuel cell cogeneration system.

### REFERENCE MARKS IN THE DRAWINGS

- 1: EXHAUST GAS PATH
- 2: SOLID OXIDE FUEL CELL
- 3: WATER CIRCULATION PATH
- 4: FIRST HEAT EXCHANGING APPARATUS
- 5: WATER COLLECTION UNIT
- 6: RADIATOR
- 7: CIRCULATION PUMP
- 8: CONTROL APPARATUS
- 9: HYDROGEN GENERATOR
- 10: FIRST TANK
- 11: RESIDUAL WATER AMOUNT DETECTION UNIT
- 12: SECOND HEAT EXCHANGING APPARATUS
- 21: REFORMING APPARATUS
- 22: FAN
- 23: SOLID POLYMER FUEL CELL
- 25: TEMPERATURE SENSOR
- 100, 200: FUEL CELL SYSTEM

## Claims

1. A fuel cell system comprising:
a fuel cell (2, 23) that generates power by using fuel;
an exhaust gas path (1) on which an exhaust gas flows;
a water circulation path (3) on which cooling water for cooling heat generated from the fuel cell (2, 23) circulates;
a first heat exchanging apparatus (4) that is provided on the exhaust gas path (1) and the water circulation path (3) and performs heat exchange between the exhaust gas and the cooling water;
a tank (10) which is provided for collecting condensed water generated by cooling the exhaust gas in the first heat exchanging apparatus (4);
a radiator (6) that is provided on the water circulation path (3) and dissipates heat of the cooling water;
a circulation pump (7) that is provided on the water circulation path (3) and causes the cooling water to be circulated; and
a control apparatus (8) which is configured to operate to switch between a first operation mode and a second operation mode, the first operation mode being a mode in which the cooling water after passing through the radiator (6) is controlled to have a first predetermined temperature, and the second operation mode being a mode in which the cooling water after passing through the radiator (6) is controlled to have a second predetermined temperature which is higher than the first predetermined temperature, by adjusting an amount of dissipated heat of the cooling water in the radiator (6),
the first predetermined temperature is a temperature at which collecting water of an amount required for an operation of the fuel cell system by the tank (10) is allowed, and
the second predetermined temperature is a temperature at which a mold in the cooling water on the water circulation path (3) and water collected by the tank (10) dies.

2. The fuel cell system of Claim 1, wherein the exhaust gas is a combustion exhaust gas discharged from a solid oxide fuel cell (2, 23).

3. The fuel cell system of Claim 1, wherein the exhaust gas is a combustion exhaust gas discharged from a hydrogen generator (9) that generates a hydrogen-containing gas from a raw material.

4. The fuel cell system of any one of Claims 1 to 3, wherein the control apparatus (8) is configured to operate such that the temperature of the cooling water after passing through the radiator (6) rises to the second predetermined temperature at a constant cycle, as the second operation mode.

5. The fuel cell system of any one of Claims 1 to 4, further comprising:
a water collection unit (5) that performs gas-liquid separation on the exhaust gas cooled by the first heat exchanging apparatus (4), and supplies a condensed water to the tank (10); and
a residual water amount detection unit (11) that detects an amount of residual water in the tank (10),
wherein the control apparatus (8) is configured to operate in the second operation mode in which the temperature of the cooling water after passing through the radiator (6) is controlled to be the second predetermined temperature, in a case where the amount of residual water detected by the residual water amount detection unit (11) is equal to or greater than a predetermined amount.

6. The fuel cell system of any one of Claims 1 to 5, wherein the control apparatus (8) is configured to maintain a state where the temperature of the cooling water after passing through the radiator (6) is increased to the second predetermined temperature, for a period which is equal to or longer than a predetermined period for a mold to die.

7. An operating method for a fuel cell system, the system including
a fuel cell (2, 23) that generates power by using fuel,
an exhaust gas path (1) on which an exhaust gas flows,
a water circulation path (3) on which cooling water for cooling heat generated from the fuel cell (2, 23) circulates,
a first heat exchanging apparatus (4) that is provided on the exhaust gas path (1) and the water circulation path (3) and performs heat exchange between the exhaust gas and the cooling water,
a tank (10) which is provided for collecting condensed water generated by cooling the exhaust gas in the first heat exchanging apparatus (4),
a radiator (6) that is provided on the water circulation path (3) and dissipates heat of the cooling water, and
a circulation pump (7) that is provided on the water circulation path (3) and causes the cooling water to be circulated,
the method comprising:
a step of controlling a temperature of the cooling water after passing through the radiator (6) to be a first predetermined temperature by adjusting the amount of dissipated heat in the radiator (6); and
a step of controlling the temperature of the cooling water after passing through the radiator (6) to be a second predetermined temperature which is higher than the first predetermined temperature by adjusting the amount of dissipated heat in the radiator (6),
the first predetermined temperature is a temperature at which collecting water of an amount required for an operation of the fuel cell system by the tank (10) is allowed, and
the second predetermined temperature is a temperature at which a mold in the cooling water on the water circulation path (3) and water collected by the tank (10) dies.

## Patentansprüche

1. Brennstoffzellen-System, das umfasst:
eine Brennstoffzelle (2, 23), die unter Verwendung von Brennstoff Strom erzeugt;
einen Abgas-Weg (1), auf dem ein Abgas strömt;
einen Wasserzirkulations-Weg (3), auf dem Kühlwasser zum Abkühlen von der Brennstoffzelle (2, 23) erzeugter Wärme zirkuliert;
eine erste Wärmeaustauschvorrichtung (4), die auf dem Abgas-Weg (1) und dem Wasserzirkulations-Weg (3) vorhanden ist und Wärmeaustausch zwischen dem Abgas und dem Kühlwasser durchführt;
einen Behälter (10), der zum Sammeln von Kondenswasser vorhanden ist, das durch Kühlen des Abgases in der ersten Wärmeaustauschvorrichtung (4) erzeugt wird;
einen Kühler (6), der auf dem Wasserzirkulations-Weg (3) vorhanden ist und Wärme des Kühlwassers abführt;
eine Zirkulations-Pumpe (7), die auf dem Wasserzirkulations-Weg (3) vorhanden ist und bewirkt, dass das Kühlwasser zirkuliert; sowie
eine Steuerungsvorrichtung (8), die so ausgeführt ist, dass sie so arbeitet, dass sie zwischen einem ersten Betriebsmodus und einem zweiten Betriebsmodus umschaltet, wobei der erste Betriebsmodus ein Modus ist, in dem so gesteuert wird, dass das Kühlwasser nach Durchlaufen des Kühlers (6) eine erste vorgegebene Temperatur hat, und der zweite Betriebsmodus ein Modus ist, in dem so gesteuert wird, dass das Kühlwasser nach Durchlaufen des Kühlers (6) eine zweite vorgegebene Temperatur hat, die höher ist als die erste vorgegebene Temperatur, indem eine Menge abgeführter Wärme des Kühlwassers in dem Kühler (6) reguliert wird,
die erste vorgegebene Temperatur eine Temperatur ist, bei der Sammeln von Wasser mittels des Behälters (10) in einer für eine Funktion des Brennstoffzellensystems erforderlichen Menge zugelassen wird, und
die zweite vorgegebene Temperatur eine Temperatur ist, bei der ein Schimmelpilz in dem Kühlwasser auf dem Wasserzirkulations-Weg (3) und in mittels des Behälters (10) gesammeltem Wasser abstirbt.

2. Brennstoffzellensystem nach Anspruch 1, wobei das Abgas ein Verbrennungs-Abgas ist, das aus einer Festoxid-Brennstoffzelle (2, 23) abgeleitet wird.

3. Brennstoffzellensystem nach Anspruch 1, wobei das Abgas ein Verbrennungsabgas ist, das aus einem Wasserstoffgenerator (9) abgeleitet wird, der aus einem Rohmaterial ein wasserstoffhaltiges Gas erzeugt.

4. Brennstoffzellensystem nach einem der Ansprüche 1 bis 3, wobei die Steuerungsvorrichtung (8) so ausgeführt ist, dass sie als dem zweiten Betriebsmodus so arbeitet, dass die Temperatur des Kühlwassers nach Durchlaufen des Kühlers (6) in einem konstanten Zyklus auf die zweite vorgegebene Temperatur ansteigt.

5. Brennstoffzellensystem nach einem der Ansprüche 1 bis 4, das des Weiteren umfasst:
eine Einheit (5) für Sammlung von Wasser, die Gas-Flüssigkeits-Trennung an dem durch die erste Wärmeaustauschvorrichtung (4) gekühlten Abgas durchführt und dem Behälter (10) ein Kondenswasser zuführt; sowie
eine Einheit (11) zur Erfassung einer Restwasser-Menge, die eine Menge an Restwasser in dem Behälter (10) erfasst,
wobei die Steuerungsvorrichtung (8) so ausgeführt ist, dass sie in dem zweiten Betriebsmodus arbeitet, in dem die Temperatur des Kühlwassers nach Durchlaufen des Kühlers (6) so gesteuert wird, dass sie die zweite vorgegebene Temperatur ist, wenn die durch die Einheit (11) zur Erfassung einer Restwasser-Menge erfasste Menge an Restwasser genauso groß ist wie oder größer als eine vorgegebene Menge.

6. Brennstoffzellensystem nach einem der Ansprüche 1 bis 5, wobei die Steuerungsvorrichtung (8) so ausgeführt ist, dass sie einen Zustand, in dem die Temperatur des Kühlwassers nach Durchlaufen des Kühlers (6) auf die zweite vorgegebene Temperatur erhöht wird, über einen Zeitraum aufrechterhält, der genauso lang ist wie oder länger als ein vorgegebener Zeitraum zum Absterben eines Schimmelpilzes.

7. Betriebsverfahren für ein Brennstoffzellen-System, wobei das System enthält:
eine Brennstoffzelle (2, 23), die unter Verwendung von Brennstoff Strom erzeugt;
einen Abgas-Weg (1), auf dem ein Abgas strömt,
einen Wasserzirkulations-Weg (3), auf dem Kühlwasser zum Abkühlen von der Brennstoffzelle (2, 23) erzeugter Wärme zirkuliert,
eine erste Wärmeaustauschvorrichtung (4), die auf dem Abgas-Weg (1) und dem Wasserzirkulations-Weg (3) vorhanden ist und Wärmeaustausch zwischen dem Abgas und dem Kühlwasser durchführt,
einen Behälter (10), der zum Sammeln von Kondenswasser vorhanden ist, das durch Kühlen des Abgases in der ersten Wärmeaustauschvorrichtung (4) erzeugt wird,
einen Kühler (6), der auf dem Wasserzirkulations-Weg (3) vorhanden ist und Wärme des Kühlwassers abführt, sowie
eine Zirkulations-Pumpe (7), die auf dem Wasserzirkulations-Weg (3) vorhanden ist und bewirkt, dass das Kühlwasser zirkuliert,
wobei das Verfahren umfasst:
einen Schritt, in dem eine Temperatur des Kühlwassers nach Durchlaufen des Kühlers (6) auf eine erste vorgegebene Temperatur gesteuert wird, indem die Menge abgeführter Wärme in dem Kühler (6) reguliert wird; und
einen Schritt, in dem die Temperatur des Kühlwassers nach Durchlaufen des Kühlers (6) auf eine zweite vorgegebene Temperatur gesteuert wird, die höher ist als die erste vorgegebene Temperatur, indem die Menge abgeführter Wärme in dem Kühler (6) reguliert wird,
wobei die erste vorgegebene Temperatur eine Temperatur ist, bei der Sammeln von Wasser mittels des Behälters (10) in einer für eine Funktion des Brennstoffzellensystems erforderlichen Menge zugelassen wird, und
die zweite vorgegebene Temperatur eine Temperatur ist, bei der ein Schimmelpilz in dem Kühlwasser auf dem Wasserzirkulations-Weg (3) und in dem mittels des Behälters (10) gesammelten Wasser abstirbt.

## Revendications

1. Système de pile à combustible comprenant :
une pile à combustible (2, 23) qui génère de l'énergie en utilisant du combustible ;
une voie de gaz d'échappement (1) à travers laquelle s'écoule un gaz d'échappement ;
une voie de circulation d'eau (3) à travers laquelle circule de l'eau de refroidissement pour éliminer la chaleur générée par la pile à combustible (2, 23) ;
un premier appareil d'échange de chaleur (4) qui est pourvu sur la voie de gaz d'échappement (1) et la voie de circulation d'eau (3) et qui met en œuvre un échange de chaleur entre le gaz d'échappement et l'eau de refroidissement ;
un réservoir (10) qui est pourvu pour collecter l'eau condensée générée en refroidissant le gaz d'échappement dans le premier appareil d'échange de chaleur (4) ;
un radiateur (6) qui est pourvu sur la voie de circulation d'eau (3) et qui dissipe la chaleur de l'eau de refroidissement ;
une pompe de circulation (7) qui est pourvue sur la voie de circulation d'eau (3) et qui fait circuler l'eau de refroidissement ; et
un appareil de contrôle (8) qui est configuré pour fonctionner de manière à commuter entre un premier mode de fonctionnement et un deuxième mode de fonctionnement, le premier mode de fonctionnement étant un mode dans lequel l'eau de refroidissement, après avoir traversé le radiateur (6), est contrôlée pour avoir une première température prédéterminée, et le deuxième mode de fonctionnement étant un mode dans lequel l'eau de refroidissement, après avoir traversé le radiateur (6), est contrôlée pour avoir une deuxième température prédéterminée qui est supérieure à la première température prédéterminée, en réglant la quantité de chaleur dissipée de l'eau de refroidissement dans le radiateur (6),
la première température prédéterminée est une température à laquelle la collecte d'eau en quantité requise pour le fonctionnement du système de pile à combustible par le réservoir (10) est permise, et
la deuxième température prédéterminée est une température à laquelle un moule dans l'eau de refroidissement sur la voie de circulation d'eau (3) et l'eau collectée par le réservoir (10) est matricé.

2. Système de pile à combustible selon la revendication 1, dans lequel le gaz d'échappement est un gaz d'échappement de combustion déchargé par une pile à combustible à oxyde solide (2, 23).

3. Système de pile à combustible selon la revendication 1, dans lequel le gaz d'échappement est un gaz d'échappement de combustion déchargé par un générateur d'hydrogène (9) qui génère un gaz contenant de l'hydrogène à partir d'une matière brute.

4. Système de pile à combustible selon l'une quelconque des revendications 1 à 3, dans lequel l'appareil de contrôle (8) est configuré pour fonctionner de telle sorte que la température de l'eau de refroidissement, après avoir traversé le radiateur (6), augmente jusqu'à la deuxième température prédéterminée selon un cycle constant, comme deuxième mode de fonctionnement.

5. Système de pile à combustible selon l'une quelconque des revendications 1 à 4, comprenant en outre :
une unité de collecte d'eau (5) qui met en œuvre une séparation gaz-liquide sur le gaz d'échappement refroidi par le premier appareil d'échange de chaleur (4), et qui alimente de l'eau condensée au réservoir (10) ; et
une unité de détection de quantité d'eau résiduelle (11) qui détecte la quantité d'eau résiduelle dans le réservoir (10),
dans lequel l'appareil de contrôle (8) est configuré pour fonctionner dans le deuxième mode de fonctionnement où la température de l'eau de refroidissement, après avoir traversé le radiateur (6), est contrôlée pour être à la deuxième température prédéterminée, dans le cas où la quantité d'eau résiduelle détectée par l'unité de détection de quantité d'eau résiduelle (11) est supérieure ou égale à une quantité prédéterminée.

6. Système de pile à combustible selon l'une quelconque des revendications 1 à 5, dans lequel l'appareil de contrôle (8) est configuré pour maintenir un état où la température de l'eau de refroidissement, après avoir traversé le radiateur (6), est augmentée jusqu'à la deuxième température prédéterminée, pour une période supérieure ou égale à une période prédéterminée pour le matriçage d'un moule.

7. Procédé de fonctionnement d'un système de pile à combustible, le système comprenant
une pile à combustible (2, 23) qui génère de l'énergie en utilisant un combustible,
une voie de gaz d'échappement (1) à travers laquelle s'écoule un gaz d'échappement,
une voie de circulation d'eau (3) à travers laquelle circule de l'eau de refroidissement pour éliminer la chaleur générée par la pile à combustible (2, 23),
un premier appareil d'échange de chaleur (4) qui est pourvu sur la voie de gaz d'échappement (1) et la voie de circulation d'eau (3) et qui met en œuvre un échange de chaleur entre le gaz d'échappement et l'eau de refroidissement,
un réservoir (10) qui est pourvu pour collecter l'eau condensée générée en refroidissant le gaz d'échappement dans le premier appareil d'échange de chaleur (4),
un radiateur (6) qui est pourvu sur la voie de circulation d'eau (3) et qui dissipe la chaleur de l'eau de refroidissement, et
une pompe de circulation (7) qui est pourvue sur la voie de circulation d'eau (3) et qui fait circuler l'eau de refroidissement,
le procédé comprenant :
une étape de contrôle de la température de l'eau de refroidissement, après avoir traversé le radiateur (6), pour qu'elle soit égale à une première température prédéterminée en réglant la quantité de chaleur dissipée dans le radiateur (6) ; et
une étape de contrôle de la température de l'eau de refroidissement, après avoir traversé le radiateur (6), pour qu'elle soit égale à une deuxième température prédéterminée qui est supérieure à la première température prédéterminée en réglant la quantité de chaleur dissipée dans le radiateur (6),
la première température prédéterminée est une température à laquelle la collecte d'eau en quantité requise pour le fonctionnement du système de pile à combustible par le réservoir (10) est permise, et
la deuxième température prédéterminée est une température à laquelle un moule dans l'eau de refroidissement sur la voie de circulation d'eau (3) et l'eau collectée par le réservoir (10) est matricé.
